(19) Europäisches Patentamt

European Patent Office

Office européen des brevets

(11) **EP 1 094 639 A2**

(12) **EUROPEAN PATENT APPLICATION**

(43) Date of publication:
25.04.2001 Bulletin 2001/17

(51) Int. Cl.$^7$: **H04L 12/413**, H04L 12/40

(21) Application number: 00122163.9

(22) Date of filing: 12.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **20.10.1999 JP 29797999**

(71) Applicants:
• **Harness System Technologies Research, Ltd.**
**Nagoya-shi, Aichi (JP)**
• **SUMITOMO WIRING SYSTEMS, Ltd.**
**Yokkaichi-shi, Mie-ken 510 (JP)**

• **SUMITOMO ELECTRIC INDUSTRIES, LTD.**
**Osaka-shi, Osaka (JP)**

(72) Inventor:
**Nakashima, Masatoshi,**
**c/o Harness Syst. Tech. Res.**
**Nagoya-shi, Aichi (JP)**

(74) Representative: **Kuhnen & Wacker**
**Patentanwaltsgesellschaft mbH,**
**Alois-Steinecker-Strasse 22**
**85354 Freising (DE)**

(54) **A communication controller and a communication method**

(57) The communication controller performs transmission (ST11) and in case an error occurs or the corresponding node loses in racing with other nodes because of a lower priority (ST12), the communication controller counts the transmission losses (abitration loss count) and continues transmission until transmission from the node loses the predetermined count (in this example N times) (ST13). When the transmission loss count has reached the predetermined count, the communication controller stops transmission (ST14) and reports the transmission state to the CPU. The CPU, in response to this report, modifies the transmission conditions, for example the identifier data in the arbitration field, the same as a conventional approach, in order to upgrade the priority (ST15).

FIG. 1

EP 1 094 639 A2

**Description**

<u>BACKGORUND OF THE INVENTION</u>

The present invention relates to a communication controller and a communication method, and in particular, to a communication controller and a communication method used in the CAN (Controller Area Network) communications.

CAN communications use a protocol for serial communications whereby control is made so that contention in data transmission between a plurality of devices connected to the same bus line will not cause data corruption and only one device transmits data with the remaining devices waiting for the next transmission opportunity. Such a communication method may be used to connect engine controllers, brake controllers and various detectors in the field of automobile electrical equipment to perform real-time control of distributed devices efficiently and with high reliability.

Application of CAN communications is not limited to vehicles such as automobiles but is expandable to the field of industrial machinery such as intra-factory control systems, building maintenance, toys, and game machines.

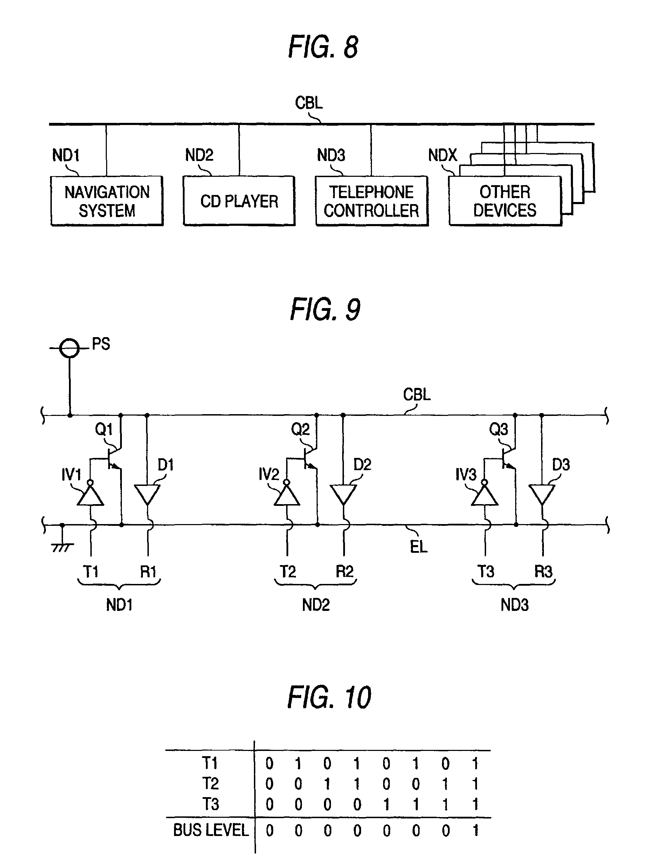

Outline of CAN communications will be explained with reference to Fig. 8 through Fig. 11.

Fig. 8 is a schematic view of a configuration where a plurality of devices (hereinafter referred to as nodes) are connected to the bus line CBL for CAN communications, as an example of automobile electrical equipment system. A node ND1 represents a navigation system, a mode ND2 a CD (compact disc) player, a node ND3 a telephone controller, and nodes NDXs the remaining devices. Each node has a communication controller composed of IC chips and a CPU (microcomputer) for processing communications data and controlling the communication controller. The communication controller manages the output data output by the same controller and supervises the state of the bus line CBL.

For CAN communications, the electric potential of a bus line (bus level) is divided into the dominant level (hereinafter referred to as the dominant) and the recessive level (hereinafter referred to as the recessive). Setting is made so that the dominant may overwrite the recessive, that is, the dominant may be prevalent. Fig. 9 shows a configuration for realizing such a setting.

In Fig. 9, the bus line CBL operates in pairs with the ground line EL. A constant voltage is supplied to the bus line CBL from the constant voltage source PS.

In Fig. 9, between the bus line CBL and the ground line EL are arranged NPN transistors Q1, Q2 and Q3 connected in parallel. To the bus line CBL are connected the inputs of drivers D1, D2 and D3.

To the bases of NPN transistors Q1 through Q3 are connected the outputs of the inverters IV1 to IV3. To the inputs of the inverters IV1 to IV3 are given transmit data T1 to T3 from nodes ND1 to ND3. The outputs of the drivers D1 to D3 are respectively given to the nodes ND1 to ND3 as receive data R1 to R3.

In such a configuration, in case a LOW signal, that is, "0" is given to the transmit data T1 to T3, the signal is inverted by the inverter Q1 to Q3 and given to the NPN transistors Q1 to Q3 as a HIGH signal, that is, "1". This turns on the transistors Q1 to Q3 to drive the electric potential of the bus line CBL to the ground potential, that is, LOW or "0".

In case any one of the transistors Q1 to Q3 is turned on, the electric potential of the bus line CBL is driven LOW or "0", which overwrites the electric potential given by the constant voltage source PS. Thus "0" is specified as dominant and "1" as recessive.

Relationship of the bus level to the transmit data T1 to T3 is shown in Fig. 10. In Fig. 10, in case any one of the transmit data pieces T1 to T3 is given "0", the electric potential of the bus line goes dominant, and in case all of the transmit data pieces T1 to T3 is given "0", the electric potential of the bus line goes recessive.

Next, the frame format of CAN communications will be described. CAN communications use the data frame containing transmit data, the remote frame for requesting data transmission from other nodes via the bus line, the error frame used for reporting errors to other frames, and the overload frame for extending the time between data pieces or between remote frames. The data frame is composed of seven fields including the arbitration field, control field, and data field.

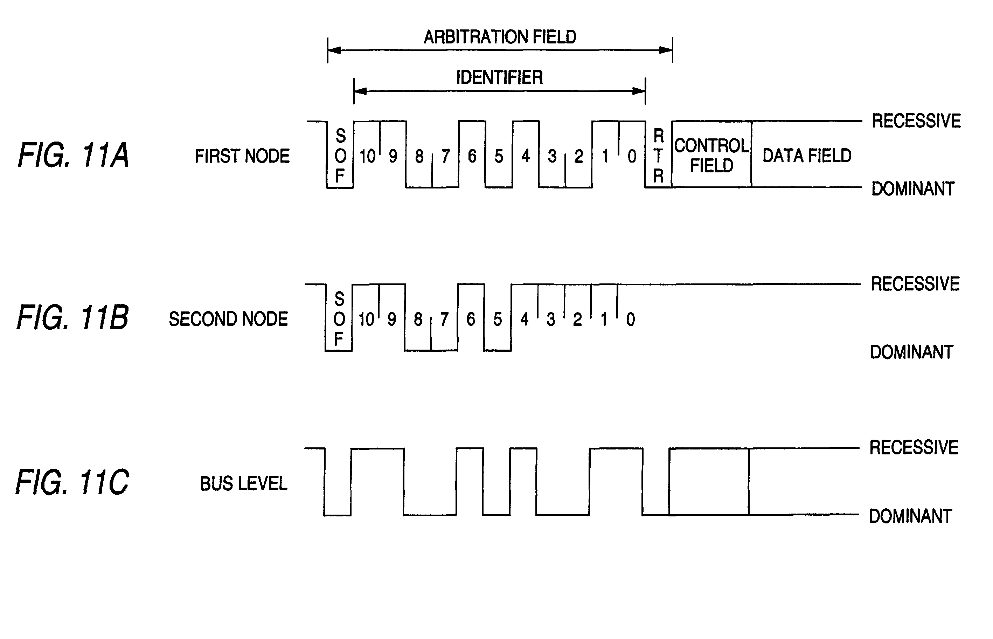

Here, using Fig. 11, the arbitration field and basic operation of CAN communications will be described.

The arbitration field has an SOF (Start of Frame) bit indicating the start of a frame, 11-bit or 29-bit identifier, and an RTR (Remote Transmission Request) bit for requesting data transmission. In CAN communications, the length of the data field is as short as a maximum of eight bytes (64 bits).

In Fig. 11, an example of data output from the two nodes (first node and second node) is shown as Fig. 11A and 11B, and the bus level state is shown as Fig. 11C. Note that Fig. 11 assumes a 11-bit identifier and the arbitration field is followed by the control field, which is followed by the data field.

AS shown in Fig. 11, in case data is simultaneously output from the first and the second nodes, either of the data pieces going dominant will place the bus level dominant; both of the data pieces going recessive will place the bus level recessive, as explained with reference to Fig. 10.

In Fig. 11, bit 10 to bit 4 contain the same data for the first and second nodes and the bus level contains the same data, although bit 3 is dominant for the first node and recessive for the second node, thus driving the bus level dominant.

With this state reached, the controller of the second node recognizes the inconsistency between the bus level state and its own output data, and determines that it has lost in racing with the first node and suspends transmission and waits for the next transmission opportunity. As a result, only the first node can perform transmission and the bus level is the same as that of the first node.

Thus, in CAN communications, in case transmission is made from a plurality of nodes, arbitration is made based on the contents of the arbitration field contained in the transmit data in each node to determine the node which is given priority in transmission. The node which has lost in arbitration suspends transmission so that data remains uncorrupted.

In the aforementioned example, data was the same up to bit 4 so that the match has not been decided until then. In case only either of the nodes is dominant at the first bit, the match is decided in that stage.

In CAN communications, "0" represents the dominant and "1" the recessive, the identifier is more often "0". The smaller the identifier as a numeric value, the higher priority it shows. The greater numeric value an identifier has, a lower priority it is given. Thus, a packet having a lower-priority identifier, that is, a lower-priority data never wins in the racing with transmission from other nodes, resulting in an excessive delay in transmission.

In order to prevent this problem, in CAN communications, a feature called transmission abort is given to the controller owned by each node. The transmission abort is a feature whereby the transmission controller stops ongoing transmission in the event of contiguous losses in arbitration or contiguous transmission error, or receiving a transmission abort instruction from the CPU.

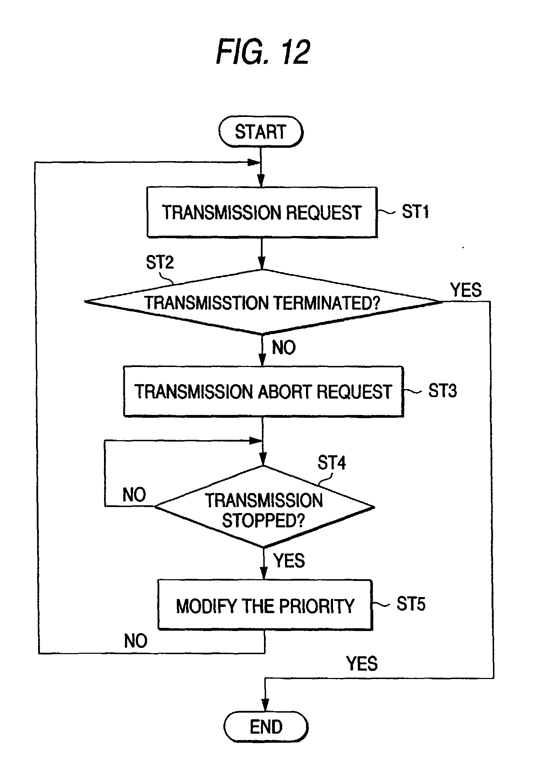

Fig. 12 shows the basic flow of transmission abort. In Fig. 12, in case transmission is made based on a transmission request (step ST1), normal completion of transmission terminates execution. In case an error occurs or the node loses in racing with other nodes because of a lower priority (step ST2), the CPU requests transmission abort (step ST3).

The communication controller, on receiving a transmission abort instruction, stops transmission. The controller checks that transmission is stopped (step ST4) then modifies the data in the identifier in the arbitration field (step ST5). Checkup in step ST5 is repeated until transmission is stopped.

Modification to the identifier is such that single-bit recessive data is modified to dominant data for all identifier composed of 11 bits or 29 bits, on a per node basis and independently for each transmit data piece, without considering the priority of transmit data from another node. The identifier also contains data such as destination so that modification is limited.

The communication controller performs transmission (step ST1) after upgrading the priority. In case transmission completes normally, execution terminates. In case an error occurs or the node loses again in racing with other nodes because of a lower priority (step ST2), step ST3 and the subsequent steps are repeated to upgrade the priority.

Thus, in order to realize transmission abort, in order for the CPU to recognize a loss in arbitration, elapsed time is measured via time measuring means such as a one-shot timer after the CPU has instructed the communication controller to output transmit data, and the CPU, assuming a loss in racing for transmission or an error in case completion of transmission is not reported even when a predetermined time has elapsed, issues a transmission abort request.

Accordingly, the CPU must be equipped with a one-shot timer, etc. and must issue a transmission stop command as required, as well as a transmission instruction command.

In the approach where transmission abort is performed and the priority of the low-priority data is upgraded, the data with a priority somewhat upgraded cannot match the higher-priority data. Repeating this procedure causes the target data to be kept from being transmitted, thus making the transmission opportunity for all nodes unequal.

SUMMARY OF THE INVENTION

The invention, proposed to solve the foregoing problems, aims at providing a communication controller which reduces the load on the CPU as a device in equalizing transmission opportunities and a communication method for equalizing transmission opportunities.

A communication controller according to the first aspect of the invention is a communication controller which is respectively included in each of a plurality of communication nodes connected to the bus line for CAN communications, receives transmit data from a microcomputer, and performs data transmission based on a transmission instruction from the microcomputer, the communication controller comprising a controller having a feature to output the transmit data to the bus line as well as to supervise the electric potential state of the bus line and determining an abitration loss in case the electric potential state of the bus line is different from the electric potential state assumed by the output data from the communication controller, and abitration loss counting means for measuring the abitration loss count, characterized in that the controller stops transmission in case the abitration loss count measured by the abitration loss counting means has reached a predetermined count.

A communication controller according to the second aspect of the invention further comprises a transmit data holding section for receiving the transmit data from the microcomputer and for temporarily holding the transmit data, the transmit data having a format where a part of the bit group of an identifier is modified to the priority-dedicated section for specifying the transmission priority, the transmit data holding section being configured so that data in the priority-dedicated section of the transmit data may be modified to upgrade the transmission priority by the microcomputer once the abitration loss count has reached the predetermined count and transmission is stopped.

A communication controller according to the third aspect of the invention is characterized in that the abitration loss counting means is a decremental counter whose predetermined count is set by the controller when it receives a transmission instruction from the microcomputer and which is decremented each time abitration loss is counted.

A communication method according to the fourth aspect of the invention is a communication method using the communication controller according to the first aspect of the invention, the method comprising a step (a) for performing data transmission toward the bus line based on a transmission request, a step (b) for determining win/lose of data transmission via supervision of the electric potential state of the bus line, and a step (c) for measuring the abitration loss count and stops transmission in case the abitration loss count has reached the predetermined count.

A communication method according to the fifth aspect of the invention is characterized in that the transmit data has a format where a part of the bit group of an identifier is modified to the priority-dedicated section for specifying the transmission priority, the method further comprising, after the step (c), a step (d) for modifying the priority-dedicated section of the transmit data in order to upgrade the transmission priority according to an instruction from the microcomputer, and a step (e) for modifying the priority-dedicated section in order to reset the transmission priority to the lowest level according to an instruction from the microcomputer.

A communication method according to the sixth aspect of the invention is characterized in that the bit length of the priority-dedicated section is set so that the maximum value of a numeral represented by the bit length can exceed the total number of the plurality of communication nodes.

A communication method according to the seventh aspect of the invention is characterized in that the elevation ratio of the transmission priority in the step (d) is the same between the plurality of communication nodes and the step (e) is executed in common between the plurality of communication nodes.

## BRIEF DESCRIPTION OF THE DRAWINGS

Fig. 1 is a flowchart explaining the basic operation of a communication controller according to the invention.
Fig. 2 is a schematic view of an identifier of the arbitration field to implement a communication method according to the invention.
Fig. 3 is a schematic view of a communication method according to the invention.
Fig. 4 is a block diagram showing the device configuration to implement a communication method according to the invention.
Fig. 5 is a flowchart explaining the operation of the devices to implement a communication method according to the invention.
Fig. 6 is a block diagram showing the device configuration to implement a communication method according to the invention.
Fig. 7 is a flowchart explaining the operation of the devices to implement a communication method according to the invention.
Fig. 8 is a schematic view of a configuration for CAN communications.
Fig. 9 shows a bus line configuration for implementing CAN communications.
Fig. 10 shows the relationship of the bus level to transmit data.
Figs. 11A to 11C show the basic operation of CAN communications.
Fig. 12 is a flowchart explaining the basic operation of CAN communications.

## DETAILED DESCRIPTION OF THE PREFERRED EMBODIMENTS

〈A. Basic operation of the communications controller〉

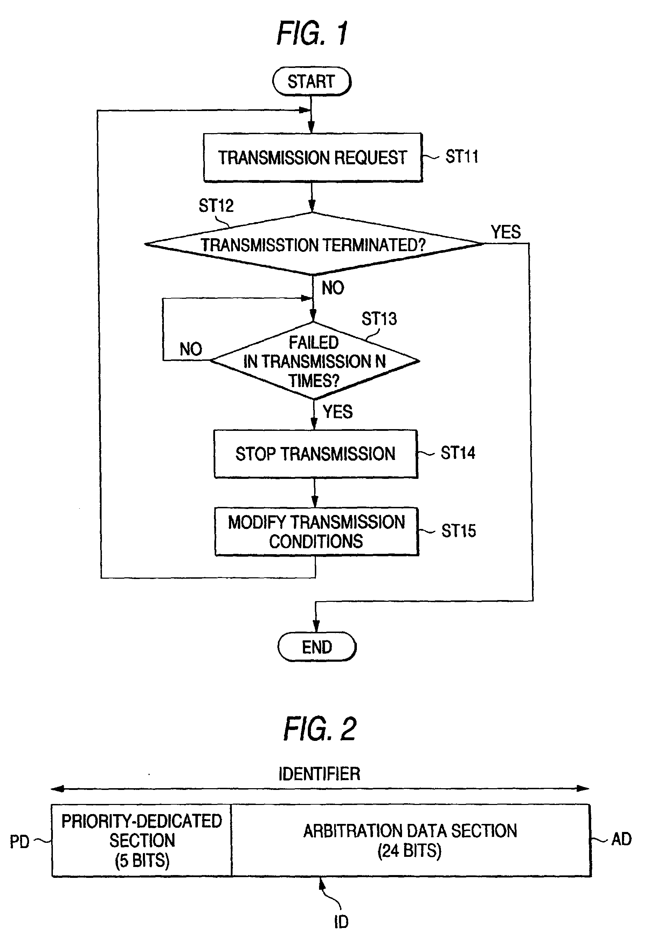

The following describes the operation of a communication controller which reduces the load on the CPU as a device in equalizing transmission opportunities, by using the flowchart in Fig. 1.

As shown in Fig. 1, in case transmission is made based on a transmission request (step ST11), normal completion of transmission terminates execution. In case an error occurs or the node loses in racing with other nodes because of a lower priority (step ST12), the communication controller counts the transmission losses (abitration loss count) and continues transmission until transmission from the node loses the predetermined count (in this example N times) (step ST13).

When the transmission loss count has reached the predetermined count, the communication controller stops transmission (step ST14) and reports the transmission state to the CPU. The CPU, in response to this report, modifies the transmission conditions, for example the identifier data in the arbitration field, the same as a conventional approach, in order to upgrade the priority (step ST15).

The communication controller performs transmission based on a transmission request after the transmission conditions have been modified (step ST11). In case transmission completes normally, execution terminates. In case an error occurs or the node loses in racing with other nodes because of a lower priority (step ST12), step ST13 and the subsequent steps are repeated to further upgrade the priority.

Thus, a communication controller according to the invention has a feature to count transmission losses and configured to stop transmission and report to the CPU once the predetermined count is reached, and to modify the transmission conditions according to an instruction from the CPU. Thus the CPU need not be equipped with a one-shot timer etc. to supervise the transmission state and need not issue a transmission stop instruction. This reduces the load on the CPU as a device.

〈B. Communications method for equalizing transmission opportunities〉

While the foregoing description includes a measure for modifying the identifier data same as the conventional approach in order to upgrade the priority as a modification to the transmission conditions, this method may fail to equalize transmission opportunities in case high-priority data interrupts the ongoing process.

The following describes the concept of a communication method whereby the transmission conditions are improved in order to reliably equalize transmission opportunities:

〈B-1. Basic concept〉

Fig. 2 is a schematic view of an identifier of the arbitration field to implement the communication method.

As shown in Fig. 2, in order to implement the communication method, part of the identifier ID bit group is turned into a priority-dedicated section PD to be used exclusively for priority control. In the example of Fig. 2, the entire identifier is composed of 29 bits. The leading five bits are used as a priority-dedicated section PD and the remaining 24 bits as an arbitration data section AD having the same data as the conventional approach.

While the priority-dedicated section PD is composed of five bits in Fig. 2, the bit length is not limited to five bits but may be determined depending on the number of nodes and data types. Note that the communication method assumes that the value represented by the bit length of the priority-dedicated section PD be greater than the number of nodes to be connected to the bus line.

Here, 5-bit priority-dedicated section PD allows 32 steps of priority to be specified. In the following description, an example of equalizing transmission opportunities will be discussed based on the 32-step priority.

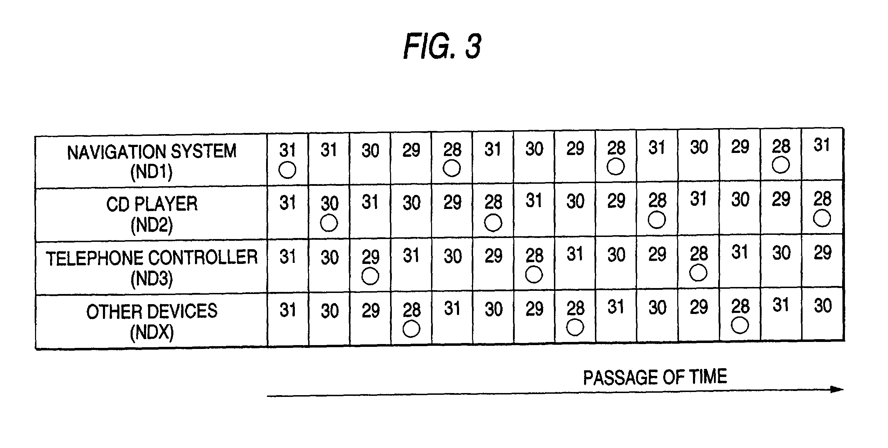

Fig. 3 is a schematic view of a state where transmission opportunities are equally given in the automobile electrical equipment system explained using Fig. 8. A node ND1 represents a navigation system, a mode ND2 a CD player, a node ND3 a telephone controller, and nodes NDXs the remaining devices.

All the nodes have transmit data (have corresponding transmission requests). Priority specified in the priority-dedicated section starts from the lowest level 31 in any node. The arbitration data section AD specifies that priorities are given in the order of node number, that is, ND1, ND2, ND3, and NDX, in case the priority specified in the priority-dedicated section is identical.

The communication controller, stops transmission when it loses once in transmission. The CPU, on receiving the report, operates to upgrade the priority specified in the priority-dedicated section. When the communication controller succeeds in transmission, the CPU receives the report and resets the priority specified in the priority-dedicated section to the lowest priority level, that is, the CPU initializes the priority.

In Fig. 3, numerals in each square represents a priority specified in the priority-dedicated section. From left to right in Fig. 3, the progress of the priority is shown which accompanies the passage of time in each node.

As shown in Fig. 3, in case transmission requests take place simultaneously in nodes ND1 to NDX, the priority specified in the priority-dedicated section of transmit data in each node (hereinafter referred to as the first priority) is initially 31 without exception, which is the lowest level. Thus transmission is made according to the priority specified in the arbitration data section (hereinafter referred to as the second priority). The second priority is a priority specific to each node which has been conventionally used.

For the second priority, the node ND1 is the highest-priority node so that only the node ND1 performs transmission. The remaining nodes determine that they have lost in transmission as notified by their respective communication controllers, then reports to their respective CPUs. The CPUs upgrades the first priority by one step, to 30.

On the other hand, the node ND1 which has succeeded in transmission is assigned the first priority level 31. In Fig. 3, the squares for successful nodes are marked with a circle (○).

The nodes ND2 to NDX still have outstanding transmission requests. In case a new transmission request takes place in the node ND1, transmit data arbitration is made between the nodes ND2 to NDX. In this practice, the first priority of the node ND1 is 31, which is lower than those of the remaining nodes. Thus, however high the second priority of transmit data in the node ND1 is, the node ND1 cannot transmit data. That is, the node ND1 cannot make an interrupt transmission. In case data transmission is made from a node other than the nodes ND1 to NDX, the corresponding priority is 31 and an interrupt transmission is not allowed. In practice, arbitration of transmit data is made based on the second priority of the nodes ND2 to NDX.

For the second priority, the node ND2 is the highest-priority node so that only the node ND2 performs transmission. The nodes ND3 and NDX determine that they have lost in transmission as notified by their respective communication controllers, then reports to their respective CPUs. The CPUs upgrades the first priority by one step, to 29.

The node ND1 has also lost in transmission so that the first priority is upgraded by one step, to 30.

On the other hand, the node ND2 which has succeeded in transmission is assigned the first priority level 31 which is the lowest level.

The nodes ND1, ND3 and NDX still have outstanding transmission requests. In case a new transmission request takes place in the node ND2, transmit data arbitration is made between the nodes ND1 to NDX. In this practice, the first priority of the node ND1 is 30, and the first priority of the node ND2 is 31. In practice, arbitration of transmit data is made based on the second priority of the nodes ND3 and NDX.

For the second priority, the node ND3 is the highest-priority node so that only the node ND3 performs transmission. The node NDX determines that it has lost in transmission as notified by its communication controller, then reports to its CPU. The CPU upgrades the first priority by one step, to 28.

The nodes ND1 and ND2 have lost in transmission so that the first priority is upgraded by one step, to 29 and 30, respectively.

On the other hand, the node ND3 which has succeeded in transmission is assigned the first priority level 31 which is the lowest level.

The nodes ND1, ND2 and NDX still have outstanding transmission requests. In case a new transmission request takes place in the node ND3, transmit data arbitration is made between the nodes ND1 to NDX. In this practice, the first priority of the nodes ND1, ND2 and ND3 is 29, 30, and 31 respectively. Thus only the node NDX can perform transmission.

The nodes ND1 and ND3 have lost in transmission so that the first priority is upgraded by one step, to 28, 29 and 30, respectively.

On the other hand, the node NDX which has succeeded in transmission is assigned the first priority level 31 which is the lowest level.

Thus, by adding a priority (first priority) for reflecting an abitration loss history in the transmit data from each node involved in transmission and upgrading in steps the first priority of a node which has losed in transmission in order to give the top priority to data which has failed to be transmitted most often while resetting the first priority of a node which has succeeded in transmission to the lowest level, unequal transmission conditions can be eliminated such as the presence of a node which always loses in arbitration and a node which always wins in arbitration, thus reliably equalizing transmission opportunities.

While, in the foregoing description, each communication controller is configured to stop transmission when it loses once in transmission, it is clear that this count may be more than once. That is, a communication controller configured to stop transmission when it loses N times running in transmission may perform transmission N times running in its turn, thus providing for repeated data transmissions.

B-2. Changing the transmission ratio〉

In the foregoing description, transmission ratio per node is constant. Transmission ratio may vary from node to node.

To change the transmission ratio, the elevation ratio of the first priority may vary from node to node.

That is, a node may have the elevation ratio of the first priority in decrements of two steps or three steps, instead of one step (-1). Such a configuration can give different transmission ratios to nodes for unequal handling of nodes. Although this method does not fully equalize transmission opportunities, it does equalize transmission opportunities in a limited range.

Note that setting of the elevation ratio is limited by the maximum value of the numeral represented by the bit length of the priority-dedicated section PD. That is, the 2-step-based elevation ratio, in decrements of two steps (-2), means that the number of nodes has increased to 2. Unless the maximum value of the numeral represented by the bit length of the priority-dedicated section PD exceeds the number of all nodes plus 1, the aforementioned communication method is not functional. This means that setting of the elevation ratio is limited.

Transmission ratio may be changed from node to node by changing the lowest level (initial value) of the first priority, not by changing the elevation ratio of the first priority.

A smaller initial value means a smaller number of steps required until the right for transmission is acquired.

For example, in case all the nodes always have transmission requests simultaneously and acquires the right for transmission once in N times according to the basic operation explained with reference to Fig. 3, a node having the initial value of the first priority smaller by n than one having the initial value can acquire the right for transmission once in (N-n) times. This means that N/(N-n) nodes have been added.

Same as changing the elevation ratio, setting of the initial value of the first priority is limited by the maximum value of the numeral represented by the bit length of the priority-dedicated section PD.

〈C. Exemplary configuration of communication controller〉

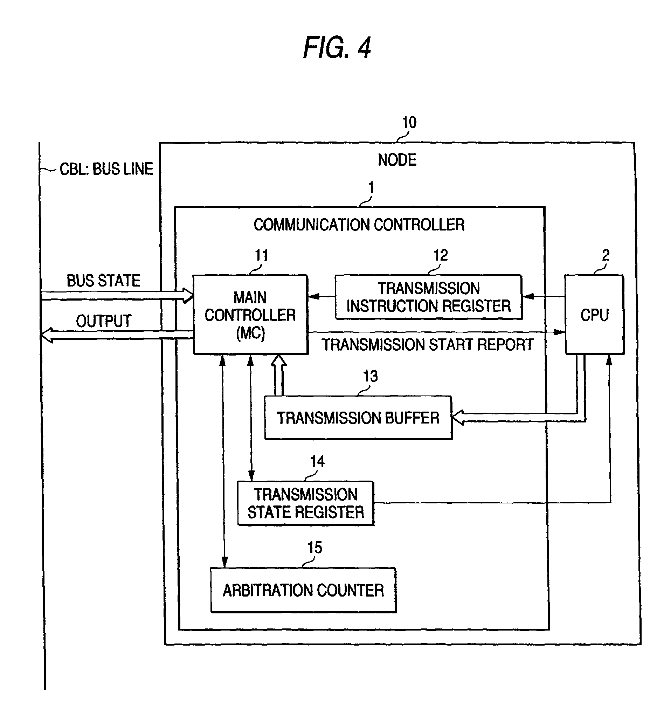

Next, an exemplary configuration of a communication controller which reduces the load on the CPU as a device in equalizing transmission opportunities will be described with reference to the block diagram of Fig. 4.

In Fig. 4, a node 10 having a communication controller 1 and a CPU 2 is shown. The node 10 may further comprise a driver, etc. for supplying signals of a predetermined voltage. In a configuration not closely related to the invention, such a driver is omitted.

In Fig. 4, the communications controller 1 outputs transmit data to the bus line CBL and comprises a main controller 11 for supervising the electric potential state of the bus line CBL, a transmission instruction register 12 whose output is connected to the main controller (abbreviated as MC) 11 for writing a transmission instruction from the CPU 2, a transmission buffer 13 whose output is connected to the MC 11 for writing transmit data from the CPU 2, a transmission state register 14 for reporting the transmission state from the MC 11 to the CPU 2, and an arbitration counter 15 (abitration loss counting means) connected to the MC 11 for counting the arbitration results or abitration loss count.

The arbitration counter 15 is configured by a decremental counter and configured to decrement a preset count by one each time transmission attempt fails. The arbitration counter 15 may be configured by an incremental counter.

〈D. Specific operation of the communication controller〉

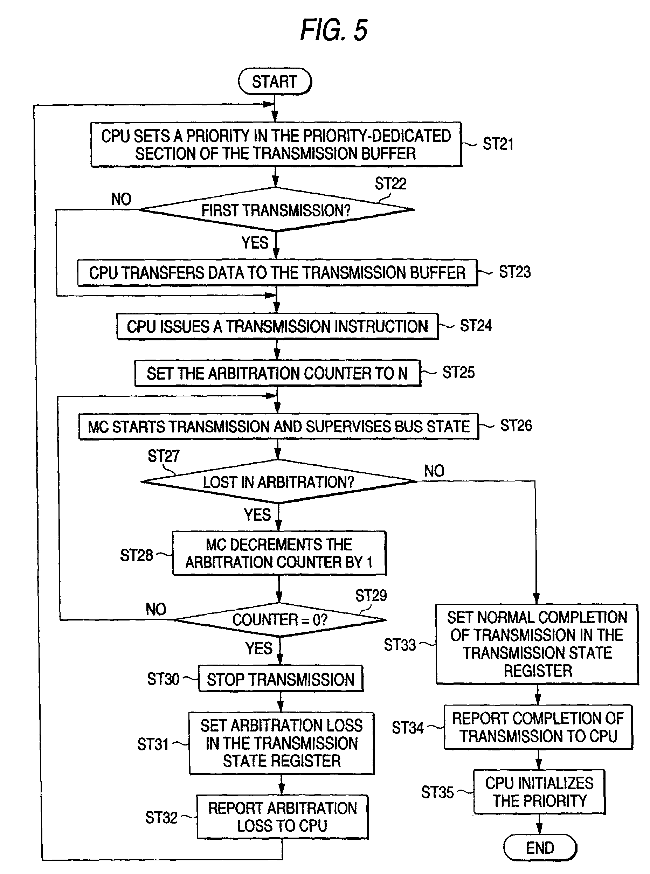

Next, operation of the communication controller 1 and CPU 2 will be described by using the flowchart in Fig. 5.

In Fig. 5, once the communication controller starts transmission based on a transmission request, the CPU 2 sets a priority in the bit position of the transmission buffer 13 corresponding to the priority-dedicated section PD of the identifier (hereinafter referred to as the priority-dedicated section PD of the buffer) explained using Fig. 2 (step ST21). Bit length of the priority-dedicated section is five bits and the priority is set to the lowest level as mentioned earlier.

Next, in case the CPU 2 confirms that the ongoing transmission is the first transmission in step ST22, the CPU 2 transfers the transmit data including data in the arbitration data section AD of the identifier shown in Fig. 2 to the transmission buffer 13 (step ST23).

Next, the CPU 2 gives a transmission instruction to the MC 11 by writing the transmission instruction to the transmission instruction register 12 (step ST24). This transmission instruction contains a transmission abort instruction for stopping transmission in case the communication controller has failed in transmission N times.

The MC 11, on receiving the transmission instruction, sets the arbitration counter to N times (step ST25) and starts transmission (step ST26). At the same time, the MC 11 starts supervising the electric potential state of the bus line. The MC 11 reports start of transmission to the CPU 2.

In case the node has lost in racing with other nodes or an error has occurred (step ST 27), the MC 11 decrements the arbitration counter by one (step ST 28).

In case the arbitration counter has reached zero, or the node has failed in transmission N times (step ST29), the MC 11 stops transmission (step ST30). In case arbitration counter has not reached zero, step ST 26 and the subsequent steps are repeated for transmission.

In case transmission is stopped, the MC 11 reports abitration loss to the CPU 2 (step ST32) by writing abitration loss to the transmission state register 14 (step ST31).

The CPU 2, recognizing the abitration loss, sets a new priority, that is, a higher priority in the priority-dedicated section of the transmission buffer 13 in step ST21 and repeats step 22 and the subsequent steps. For the second or subsequent transmission, the CPU 2 modifies the priority without transferring transmit data to the transmission buffer 13.

Transmit data may be transferred to the transmission buffer 13 for the second or subsequent transmission.

In case the transmission is successful (step ST27), the MC 11 reports transmission success to the CPU 2 (step ST34) by writing transmission success to the transmission state register 14 (step ST33). In step ST35, the CPU 2 initializes the priority of the priority-dedicated section of the transmission buffer 13, that is, the CPU resets the priority to the lowest priority level to terminate transmission.

〈E. Advantages〉

As mentioned earlier, the communication controller 1 comprises an arbitration counter 15 for counting the arbitration results or abitration loss count and after the predetermined abitration loss count has been reached, stops transmission and reports to the CPU, then modifies transmission conditions based on an instruction from the CPU 2. Thus the CPU has only to issue a transmission instruction containing a transmission abort instruction for stopping transmission in case transmission has failed N times. Further, the CPU need not be equipped with a one-shot timer etc. to supervise the transmission state. This reduces the load on the CPU 2 as a device.

Use of the communication controller 1 facilitates implementation of the communication method for reliably equalizing transmission opportunities explained using Fig. 3.

This approach requires no special protocols for managing allocation of priority, thus maximizing the use efficiency of the bus line.

〈F. Variation〉

The communication method for reliably equalizing transmission opportunities explained using Fig. 3 may be implemented without using a communication controller according to the invention explained using Fig. 4.

That is, the communication method may be implemented without the communication controller being equipped with an arbitration counter, via a configuration where the CPU 2 comprises a one-shot timer, etc. to supervise the transmission state and issues a transmission abort instruction as required.

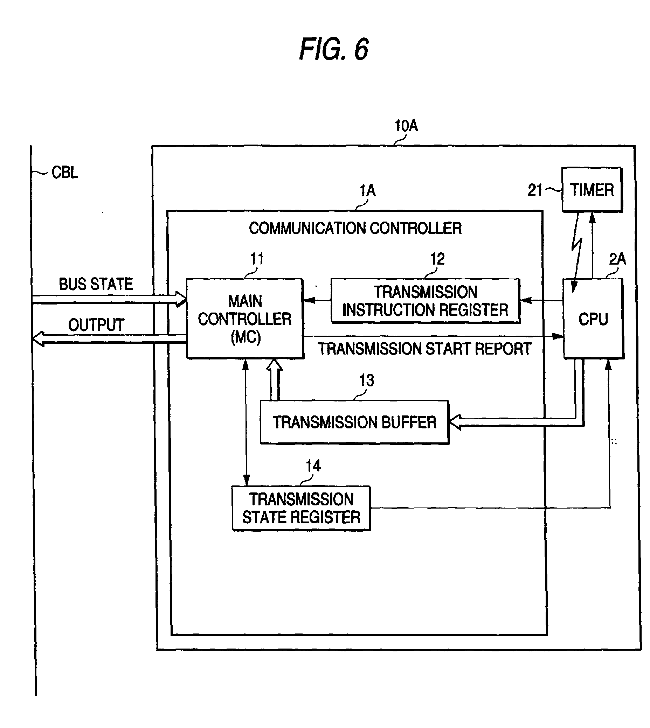

Fig. 6 shows a block diagram of such a configuration. In Fig. 6, a node 10A comprising a communication controller 1A and a CPU 2A is shown.

The configuration of the communication controller 1A is basically the same as that of the communication controller 1 in Fig. 4, except that the communication controller 1A does not comprise an arbitration counter 15 and the MC 11 does not have a feature to control the arbitration counter 15.

The CPU 2A comprises a timer 21 which is set on receiving a transmission instruction and starts measuring the predetermined time, and has a feature to supervise the transmission state.

Except for these differences, the configuration is the same as that of the node 10 in Fig. 4. Same signs are used for the same configuration and corresponding details are omitted.

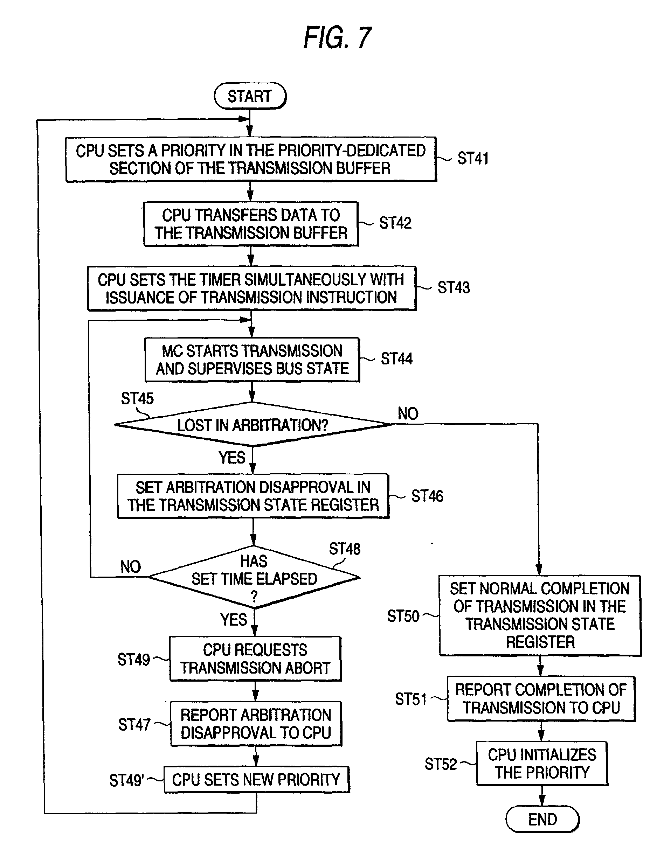

Next, operation of the communication controller 1A and CPU 2A will be described by using the flowchart in Fig. 7.

In Fig. 7, once the communication controller starts transmission based on a transmission request, the CPU 2 sets a priority in the priority-dedicated section of the transmission buffer 13 (step ST41). Bit length of the priority-dedicated section is five bits and the priority is set to the lowest level as mentioned earlier.

Next, the CPU 2A transfers the transmit data including data in the arbitration data section AD of the identifier shown in Fig. 2 to the transmission buffer 13 (step ST42).

Next, the CPU 2 gives a transmission instruction to the MC 11 by writing the transmission instruction to the transmission instruction register 12 (step ST24).

The MC 11, on receiving a transmission instruction, starts transmission and supervision of the electric potential state of the bus line simultaneously (step ST44). The MC 11 reports start of transmission to the CPU 2A.

In case the node has lost in racing with other nodes or an error has occurred (step ST 45), the MC 11 reports abitration loss to the CPU 2A (step ST47) by writing abitration loss to the transmission state register 14 (step ST46).

The CPU 2A which has recognized contiguous arbitration loss checks whether the predetermined time has elapsed on the timer 21 in step ST48. In case the predetermined time has not elapsed , the CPU 2A repeats step ST44 and the subsequent steps to continue transmission. Otherwise, the CPU 2A issues a transmission abort instruction to stop transmission (step ST49).

After stopping transmission, the CPU 2A sets a new priority ST49' or a higher priority in the priority-dedicated section of the transmission buffer 13 and repeats step ST42 and the subsequent steps. For retransmission, the CPU 2A modifies the priority without transferring transmit data to the transmission buffer 13.

In case transmission is successful (step ST45), the MC 11 reports transmission success to the CPU 2A (step ST51) by writing transmission success to the transmission state register 14 (step ST50). In step ST52, the CPU 2A initializes the priority of the priority-dedicated section of the transmission buffer 13, that is, the CPU resets the priority to the lowest priority level to terminate transmission.

In the configuration of the communication controller 1A, the CPU 2A must be equipped with a one-shot timer, etc. to supervise the transmission state and the CPU 2A must issue a transmission stop instruction. The load on the CPU 2 as a device is not reduced but the same advantage as that from counting the losses in arbitration may be obtained by adjusting the set time of the timer 21, thus implementing the communication method for reliably equalizing transmission opportunities.

According to a communication controller of the first aspect of the invention, a feature to count abitration loss is provided and transmission is stopped when the predetermined count is reached. Thus a microcomputer need not be equipped with a one-shot timer, etc. to supervise the transmission state and the microcomputer need not issue a transmission stop instruction, thus reducing the load on the microcomputer as a device.

According to a communication controller of the second aspect of the invention, the transmit data holding section is configured so that data in the priority-dedicated section of transmit data may be modified to upgrade the transmission priority by a microcomputer. As a result, by upgrading the priority of the priority-dedicated section of transmit data after the abitration loss count has reached a predetermined count and transmission has been stopped, transmission opportunities may be equalized between a plurality of communication nodes.

According to a communication controller of the third aspect of the invention, abitration loss counting means is composed of a decremental counter, thus simplifying the device configuration.

According to a communication method of the fourth aspect of the invention, abitration loss is counted and transmission is stopped when the predetermined count is reached. Thus a microcomputer need not supervise the transmission state and it need not issue a transmission stop instruction, thus reducing the load on the microcomputer as a device and providing more handy CAN communications.

According to a communication method of the fifth aspect of the invention, the priority-dedicated section of transmit data is modified to upgrade the transmission priority after the abitration loss count has reached a predetermined count and transmission has been stopped, as well as the priority-dedicated section of transmit data is modified to reset the transmission priority to the lowest level in step (b) in case successful transmission is assumed. Thus, by repeating operations of upgrading in steps the transmission priority of a communication node which has failed in transmission and of resetting the transmission priority of a communication node which has succeeded in transmission to the lowest level, unequal transmission conditions can be eliminated such as the presence of a communication node which always loses in arbitration and a communication node which always wins in arbitration, thus reliably equalizing transmission opportunities.

According to a communication method of the sixth aspect of the invention, by setting the length of the priority-dedicated section so that the maximum value of a numeral represented by the bit length can exceed the total number of the plurality of communication nodes, a communication method for equalizing transmission opportunities can be operated normally.

According to a communication method of the seventh aspect of the invention, by specifying the same elevation ratio of the transmission priority between the plurality of communication nodes and operation for resetting the transmission priority to the lowest level is made in common between the plurality of communication nodes, transmission opportunities can be equalized in the simplest fashion.

## Claims

1. A communication controller respectively included in each of a plurality of communication nodes connected to a bus line for CAN communications, said communication controller receiving transmit data from a microcomputer and performing data transmission based on a transmission instruction from said microcomputer,

   said communication controller comprising:
   a controller having a feature to output the transmit data to said bus line as well as to supervise the electric potential state of said bus line and determining an abitration loss in case the electric potential state of said bus line is different from the electric potential state assumed by said output data from said communication controller, and

   abitration loss counting means for measuring the abitration loss count, wherein
   said controller stops transmission in case the abitration loss count measured by said abitration loss counting means reaches a predetermined count.

2. The communication controller according to claim 1, further comprising:

   a transmit data holding section for receiving the transmit data from said microcomputer and for temporarily holding the transmit data,
   the transmit data having a format where a part of the bit group of an identifier is modified to priority-dedicated section for specifying the transmission priority,
   said transmit data holding section being configured so that data in said priority-dedicated section of the transmit data is modified to upgrade the transmission priority by said microcomputer once the abitration loss count reaches the predetermined count and transmission is stopped.

3. The communication controller according to claim 2, wherein

   said abitration loss counting means is a decremental counter whose predetermined count is set by said controller when said controller receives a transmission instruction from said microcomputer and which is decremented each time abitration loss is counted.

4. The communication method using the communication controller according to claim 1,
   said method comprising:

   (a) a step for performing data transmission toward said bus line based on a transmission request,
   (b) a step for determining success/failure of data transmission via supervision of the electric potential state of said bus line, and
   (c) a step for measuring the abitration loss count and stops transmission in case said abitration loss count reaches the predetermined count.

5. The communication method according to claim 4, wherein

   said transmit data has a format where a part of the bit group of an identifier is modified to the priority-dedicated section for specifying the transmission priority,
said method further comprising: after said step (c),

(d) a step for modifying said priority-dedicated section of the transmit data in order to upgrade the transmission priority according to an instruction from said microcomputer, and
(e) a step for modifying said priority-dedicated section in order to reset the transmission priority to the lowest level according to an instruction from said microcomputer.

6. The communication method according to claim 5, wherein

the bit length of said priority-dedicated section is set so that the maximum value of a numeral represented by the bit length exceeds the total number of said plurality of communication nodes.

7. The communication method according to claim 5, wherein

the elevation ratio of the transmission priority in the step (d) is the same between said plurality of communication nodes, and
the step (e) is executed in common between said plurality of communication nodes.

## FIG. 1

START

TRANSMISSION REQUEST — ST11

ST12

TRANSMISSTION TERMINATED? — YES

NO

ST13

FAILED IN TRANSMISSION N TIMES? — NO

YES

STOP TRANSMISSION — ST14

MODIFY TRANSMISSION CONDITIONS — ST15

END

## FIG. 2

IDENTIFIER

| PD | PRIORITY-DEDICATED SECTION (5 BITS) | ARBITRATION DATA SECTION (24 BITS) | AD |

ID

## FIG. 3

| | | | | | | | | | | | | | |
|---|---|---|---|---|---|---|---|---|---|---|---|---|---|
| NAVIGATION SYSTEM (ND1) | 31 ◯ | 31 | 30 | 29 | 28 ◯ | 31 | 30 | 29 | 28 ◯ | 31 | 30 | 29 | 28 ◯ | 31 |
| CD PLAYER (ND2) | 31 | 30 ◯ | 31 | 30 | 29 | 28 ◯ | 31 | 30 | 29 | 28 ◯ | 31 | 30 | 29 | 28 ◯ |
| TELEPHONE CONTROLLER (ND3) | 31 | 30 | 29 ◯ | 31 | 30 | 29 | 28 ◯ | 31 | 30 | 29 | 28 ◯ | 31 | 30 | 29 |
| OTHER DEVICES (NDX) | 31 | 30 | 29 | 28 ◯ | 31 | 30 | 29 | 28 ◯ | 31 | 30 | 29 | 28 ◯ | 31 | 30 |

PASSAGE OF TIME →

## FIG. 4

## FIG. 5

START

CPU SETS A PRIORITY IN THE PRIORITY-DEDICATED SECTION OF THE TRANSMISSION BUFFER — ST21

FIRST TRANSMISSION? — ST22

NO

YES

CPU TRANSFERS DATA TO THE TRANSMISSION BUFFER — ST23

CPU ISSUES A TRANSMISSION INSTRUCTION — ST24

SET THE ARBITRATION COUNTER TO N — ST25

MC STARTS TRANSMISSION AND SUPERVISES BUS STATE — ST26

ST27 — LOST IN ARBITRATION?

YES

NO

ST28 — MC DECREMENTS THE ARBITRATION COUNTER BY 1

COUNTER = 0? — ST29

NO

YES

ST30 — STOP TRANSMISSION

ST31 — SET ARBITRATION LOSS IN THE TRANSMISSION STATE REGISTER

ST32 — REPORT ARBITRATION LOSS TO CPU

ST33 — SET NORMAL COMPLETION OF TRANSMISSION IN THE TRANSMISSION STATE REGISTER

ST34 — REPORT COMPLETION OF TRANSMISSION TO CPU

ST35 — CPU INITIALIZES THE PRIORITY

END

## FIG. 6

# FIG. 7

START

CPU SETS A PRIORITY IN THE PRIORITY-DEDICATED SECTION OF THE TRANSMISSION BUFFER — ST41

CPU TRANSFERS DATA TO THE TRANSMISSION BUFFER — ST42

CPU SETS THE TIMER SIMULTANEOUSLY WITH ISSUANCE OF TRANSMISSION INSTRUCTION — ST43

MC STARTS TRANSMISSION AND SUPERVISES BUS STATE — ST44

ST45 — LOST IN ARBITRATION? — NO

YES

SET ARBITRATION DISAPPROVAL IN THE TRANSMISSION STATE REGISTER — ST46

ST48 — HAS SET TIME ELAPSED ? — NO

YES

ST49 — CPU REQUESTS TRANSMISSION ABORT

ST47 — REPORT ARBITRATION DISAPPROVAL TO CPU

ST49' — CPU SETS NEW PRIORITY

ST50 — SET NORMAL COMPLETION OF TRANSMISSION IN THE TRANSMISSION STATE REGISTER

ST51 — REPORT COMPLETION OF TRANSMISSION TO CPU

ST52 — CPU INITIALIZES THE PRIORITY

END

16

## FIG. 8

```
                              CBL
────────────────┬──────────────┬──────────────┬──────────────────────
  ND1           │    ND2       │    ND3       │    NDX ┌──┐┌──┐┌──┐
 ┌──────────────┴─┐ ┌──────────┴─┐ ┌──────────┴───┐ ┌─┴──┴┴──┴┴──┴─┐
 │  NAVIGATION    │ │            │ │  TELEPHONE    │ │   OTHER      │
 │  SYSTEM        │ │ CD PLAYER  │ │  CONTROLLER   │ │   DEVICES    │
 └────────────────┘ └────────────┘ └───────────────┘ └──────────────┘
```

## FIG. 9

## FIG. 10

| | | | | | | | | |
|---|---|---|---|---|---|---|---|---|
| T1 | 0 | 1 | 0 | 1 | 0 | 1 | 0 | 1 |
| T2 | 0 | 0 | 1 | 1 | 0 | 0 | 1 | 1 |
| T3 | 0 | 0 | 0 | 0 | 1 | 1 | 1 | 1 |
| BUS LEVEL | 0 | 0 | 0 | 0 | 0 | 0 | 0 | 1 |

FIG. 11A

ARBITRATION FIELD

IDENTIFIER

FIRST NODE

| S O F | 10 | 9 | 8 | 7 | 6 | 5 | 4 | 3 | 2 | 1 | 0 | R T R | CONTROL FIELD | DATA FIELD |

RECESSIVE

DOMINANT

FIG. 11B   SECOND NODE

| S O F | 10 | 9 | 8 | 7 | 6 | 5 | 4 | 3 | 2 | 1 | 0 |

RECESSIVE

DOMINANT

FIG. 11C   BUS LEVEL

RECESSIVE

DOMINANT

EP 1 094 639 A2

# FIG. 12

```
           ( START )
               │
               ▼
    ┌──────────────────────┐
──▶ │ TRANSMISSION REQUEST │ ── ST1
│   └──────────────────────┘
│              │
│   ST2        ▼
│         ◇─────────────────────◇           YES
│        ◇  TRANSMISSTION TERMINATED? ◇──────────┐
│         ◇─────────────────────◇                │
│              │ NO                              │
│              ▼                                 │
│   ┌──────────────────────────┐                 │
│   │ TRANSMISSION ABORT REQUEST │ ── ST3         │
│   └──────────────────────────┘                 │
│              │                                 │
│        ┌─────┘                                 │
│        │     ▼           ST4                   │
│   NO   │  ◇───────────────◇                    │
│   ◀────┤ ◇  TRANSMISSION   ◇                   │
│        │  ◇   STOPPED?     ◇                    │
│         ◇───────────────◇                      │
│              │ YES                             │
│              ▼                                 │
│   ┌──────────────────────┐                     │
│   │  MODIFY THE PRIORITY  │ ── ST5             │
│   └──────────────────────┘                     │
│   NO         │                                 │
└──────────────┘              YES                │
                                                ▼
                                           ( END )
```